# FASCICULE DE BREVET EUROPEEN

(11) **EP 0 704 650 B1**
(45) Date de publication et mention de la délivrance du brevet: **11.06.1997**
(21) Numéro de dépôt: 94402143.5
(22) Date de dépôt: 27.09.1994
(51) Int. Cl.: F16L 5/10, H02G 3/08

(54) **Joint d'étanchéité pour câble, tuyau ou similaire et son application à un boîtier de connexion électrique**
Dichtring für Kabel, Rohre oder dergleichen und seine Verwendung an einem elektrischen Anschlussgehäuse
Sealing ring for cable, pipe or the like and its usage in an electric connection box

(43) Date de publication de la demande: 03.04.1996
(73) Titulaire: I S V INDUSTRIE STECK-VORRICHTUNGEN GMBH, D-77731 Willstätt-Sand (DE); Société d'Exploitation des Procédés Maréchal (SEPM), société anonyme, F-94417 Saint Maurice Cédex (FR)
(72) Inventeur: Hinz, Hans-Peter, F-67800 Bischheim (FR)
(74) Mandataire: Chambon, Gérard

(56) Documents cités:
- EP-A- 0 435 172
- WO-A-92/19034
- US-A- 2 517 693
- US-A- 5 071 143

## Description

L'invention concerne un joint d'étanchéité pour la traversée d'une paroi par un câble, tuyau ou similaire et son application, notamment aux boîtiers de connexion électrique.

Dans un boîtier de connexion électrique, tel qu'un boîtier de dérivation par exemple, il est connu d'utiliser un ou plusieurs orifices d'entrée et/ou de sortie de câbles en assurant l'étanchéité au niveau desdits orifices par des joints annulaires et/ou des presse-étoupe ou similaires.

Pour traverser le boîtier, le ou les câbles sont coupés et raccordés à des bornes de contact de telle sorte qu'il suffit de faire passer lesdits câbles au travers des joints annulaires.

En vue notamment de proposer un boîtier de dérivation, en particulier pour l'éclairage de tunnels routiers, on a imaginé un système de branchement sans qu'il soit nécessaire de couper le câble de la ligne au moyen, entre autre, de bornes de dérivation par perforation.

Dans ce cas, il n'est plus possible d'introduire les extrémités des câbles dans les joints et il est nécessaire d'utiliser des joints fendus, par exemple du type décrit dans le brevet US-A-2,517,693.

Toutefois, ce type de joint n'est pas toujours satisfaisant et c'est pourquoi l'inventeur propose un nouveau joint qui assure une bonne étanchéité.

Par ailleurs, le joint selon l'invention permet non seulement de rattraper les différences de jeu toujours possibles dues à la tolérance sur les diamètres des câbles, mais il permet une adaptation automatique à divers diamètres de câbles.

Cependant, il est clair qu'un tel joint n'est pas limité à l'application précitée et concerne n'importe quel joint d'étanchéité pour la traversée d'une paroi par un câble, tuyau ou similaire, en matière déformable et présentant un alésage pour le passage dudit câble et une fente ménagée de l'alésage jusqu'à l'extérieur, pour l'introduction du câble dans ledit alésage.

Le joint selon l'invention est notamment remarquable en ce que la fente présente une forme courbe jusqu'à son extrémité d'ouverture et s'étend à partir dudit alésage de manière sensiblement tangentielle à la surface intérieure de celui-ci, tandis qu'elle est constituée par deux surfaces en regard l'une de l'autre, respectivement rentrante et saillante, et qui sont destinées à venir au contact l'une de l'autre au moins en partie, après mise en place du joint dans un logement approprié de l'élément à équiper.

De préférence, la surface rentrante de la fente se prolonge de manière continue pour constituer la surface intérieure de l'alésage, tandis que la surface saillante de la fente rejoint la surface intérieure de l'alésage par une ligne de rebroussement.

Selon un mode de réalisation, au repos, hors de son logement, la surface rentrante de la fente et la surface intérieure de l'alésage forment une surface continue spiralée, tandis que la forme générale extérieure du joint présente une section en forme de U à fond arrondi, la fente débouchant à l'opposé dudit fond.

Pour permettre une bonne adaptabilité à divers diamètres de câbles, le joint peut présenter sur chacun de ses flancs, une rainure qui entoure en partie l'alésage tandis que de préférence, l'âme centrale de matière qui sépare les deux espaces vides réalisés par les rainures constitue une cloison intérieure mince qui est disposée obliquement entre lesdites rainures.

De manière non obligatoire, le joint présente sur sa surface extérieure une nervure de section sensiblement semi-circulaire.

Comme déjà dit, de nombreuses applications peuvent être prévues, aussi bien en plomberie pour des tuyaux, en hydraulique, en mécanique, qu'en électricité.

Selon une application, un joint selon l'invention équipe un boîtier de connexion électrique en prenant place dans le logement approprié aménagé au voisinage de l'orifice d'entrée et/ou de sortie dudit boîtier de connexion électrique, ledit logement étant prévu pour que ledit orifice soit sensiblement coaxial à l'alésage du joint, lorsque ledit joint est mis en place.

Par exemple, le logement du joint est fermé par une partie appropriée du couvercle du boîtier, tandis que ledit logement peut être aménagé en outre à l'extérieur de la partie du boîtier destinée aux connexions.

L'invention sera bien comprise à la lecture de la description qui va suivre et qui se réfère aux dessins annexés dans lesquels:
- la figure 1 montre en élévation un joint selon l'invention, au repos,
- la figure 2 montre le joint de la figure 1 dans son logement avec un câble,
- la figure 3 est une vue de dessus de la figure 2,
- la figure 4 est une coupe selon IV-IV de la figure 2,
- la figure 5 correspond à la figure 2 avec un câble de plus gros diamètre,
- la figure 6 montre un boîtier de dérivation (sans couvercle) pour un câble électrique, et qui est prévu pour être équipé avec des joints selon l'invention,
- la figure 7 montre le boîtier de la figure 2 en vue latérale, pourvu d'un couvercle articulé, ainsi qu'un joint prêt à être installé.

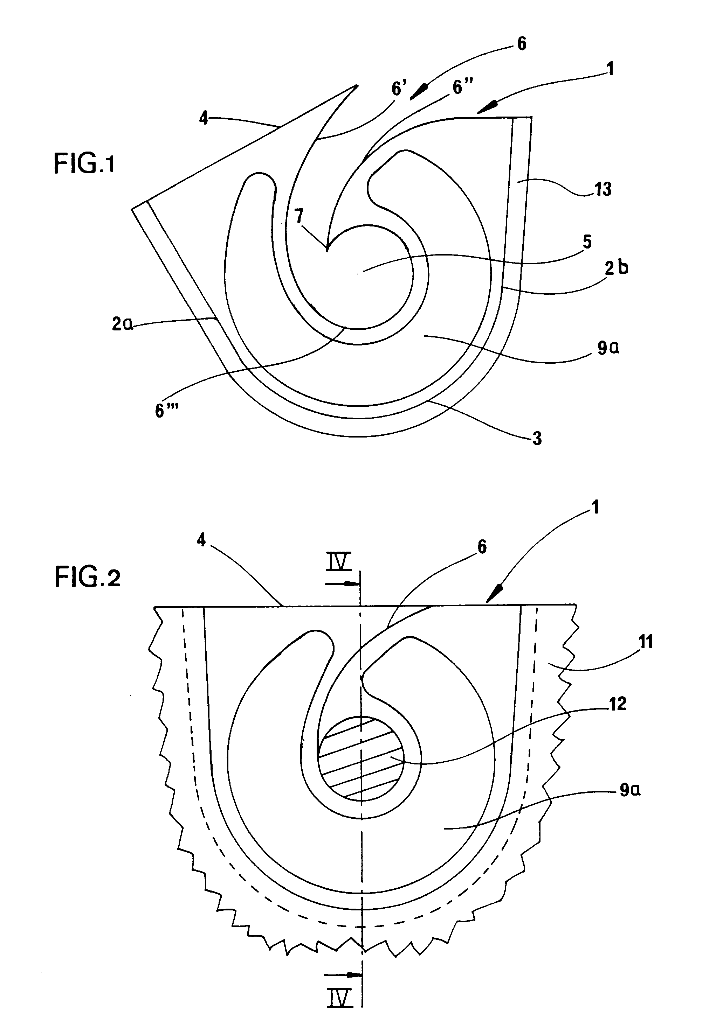

Le joint 1 représenté sur les figures 1 à 5 forme un bloc d'une matière déformable élastiquement dont le profil extérieur est sensiblement en U avec deux branches 2a, 2b sensiblement divergentes, au moins en position de repos, et un fond arrondi 3.

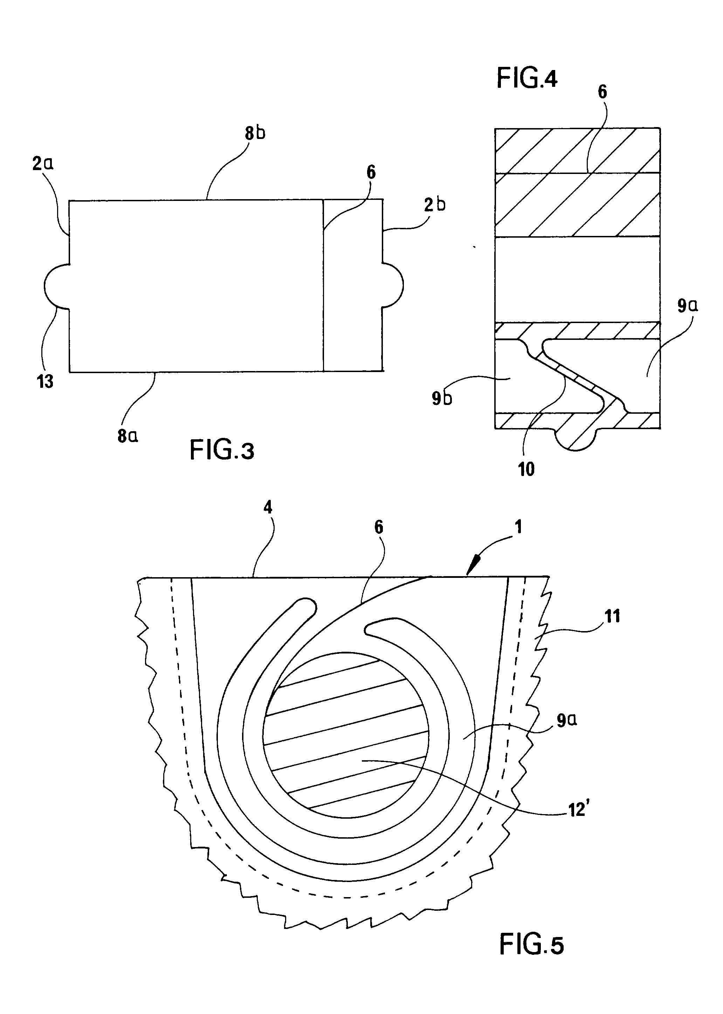

Comme le montrent les figures 3 et 4, en vue de dessus et de côté, la forme du joint est sensiblement rectangulaire, le dessus opposé au fond 3 du U étant référencé 4 sur les dessins.

En outre le joint selon l'invention présente un alésage central 5 qui est relié à l'extérieur par une fente 6 courbe, laquelle débouche sur le dessus 4 du joint.

Comme le montre bien la figure 1, la fente 6 est constituée par une surface dite rentrante 6' et une surface dite saillante en regard 6''. Dans le plan des figures 1, 2, 5 et 7, les surfaces 6' et 6'' ont en effet des formes respectivement concave (courbée vers l'intérieur) et convexe (courbée vers l'extérieur).

La surface rentrante 6' s'étend de manière continue pour former la surface intérieure 6''' de l'alésage 5 tandis que cette dernière rejoint la surface saillante 6'' de la fente par une ligne de rebroussement 7.

Les surfaces 6' et 6''' de la fente forment ici une surface spiralée (c'est-à-dire une surface engendrée par une droite se déplaçant parallèlement à elle-même le long d'une spirale).

De plus, les flancs 8a, 8b (figure 3) du joint comportent chacun une rainure 9a, 9b en forme générale de haricot, ménagée autour (au moins en partie) de l'alésage central 5.

On peut aussi constater que les rainures 9a, 9b ne sont pas tout à fait symétriques, leurs extrémités s'adaptant à la quantité de matière présente.

Comme le montre plus particulièrement la figure 4, les espaces vides constituant les rainures 9a et 9b sont séparés entre eux par une mince cloison intérieure 10 qui est en outre disposée obliquement.

Sur la figure 2, on montre le joint 1 disposé dans un logement 11 schématisé en partie, de forme appropriée c'est-à-dire de forme conjuguée à la forme extérieure du joint après sa mise en place.

On comprend qu'avant la mise en place du joint 1 dans son logement 11, le câble ou similaire représenté en 12 est d'abord introduit dans l'alésage 5 du joint en passant par la fente 6, au besoin en élargissant un peu celle-ci.

De la sorte, les surfaces en regard 6', 6'' de la fente 6 viennent au contact l'une de l'autre et le câble 12 est parfaitement enserré dans l'alésage qui prend bien évidemment une forme cylindrique.

La continuité des surfaces 6' et 6''' fait que la fente courbe 6 relie tangentiellement l'alésage central 5 (figures 2 et 5). Toutefois, on comprend que la fente 6 pourrait être rectiligne (surfaces 6' et 6'' planes) bien que sa fermeture étanche pourrait ne pas être aussi sûre, de même que les avantages qui vont être décrits ci-après pourraient être altérés, voire inexistants.

En effet, la figure 5 montre le même joint 1 que celui des figures 1 à 4 disposé dans un logement identique 11 mais avec un câble 12' d'un diamètre nettement plus important.

On comprend que la forme spiralée des surfaces 6', 6'' et 6''' permet une sorte d'enroulement du joint dans lui-même.

Par ailleurs, la matière du joint peut être aisément comprimée par déformation de la cloison 10 séparant les rainures 9a et 9b dont la section peut facilement diminuer en largeur (voir la figure 5 par rapport à la figure 4).

Il est clair que si une telle différence de diamètre du câble peut être absorbée, le problème des simples tolérances est évidemment résolu.

A titre complémentaire, mais non obligatoire, on peut aussi prévoir une nervure 13, ici de section semi-circulaire aménagée sur la surface extérieure, des branches 2a, 2b et de la partie 3 du joint, le logement 11 ayant une gorge prévue à cet effet pour une meilleure étanchéité du joint dans son logement.

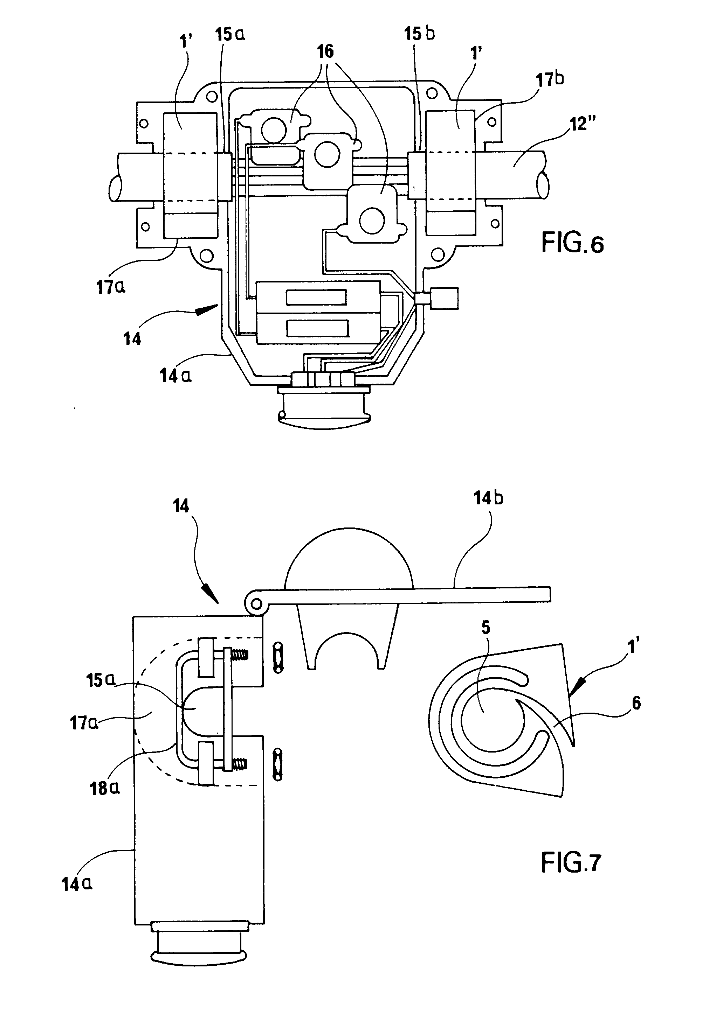

Comme déjà dit, les applications peuvent être tout à fait nombreuses et l'illustration de l'application représentée sur les figures 6 et 7 est donnée à titre d'exemple bien que tout à fait particulière et originale.

Les figures 6 et 7 montrent un boîtier de dérivation 14 alimenté par un câble de ligne 12", par exemple pour constituer un boîtier d'éclairage ou un boîtier de prise électrique.

Comme on peut le constater dans ce boîtier, le câble 12'' est traversant, c'est-à-dire qu'il n'est pas interrompu et traverse le boîtier d'un orifice d'entrée 15a à un orifice de sortie 15b. Le boîtier 14 pourrait bien sûr être traversé par plusieurs câbles et comporter plusieurs paires d'orifices 15a, 15b.

A l'intérieur, le câble est simplement dégainé et les connexions des divers conducteurs sont par exemple effectuées au moyen de bornes de dérivation par perforation, telles que 16 (lesdits conducteurs pourraient être directement dénudés sans coupure).

Ici le boîtier est en deux parties 14a et 14b, la partie 14b constituant un couvercle articulé.

A chaque orifice 15a, 15b du boîtier, est prévu un logement 17a, 17b pour un joint tel que celui précédemment décrit représenté en 1' sur les figues 6 et 7, lesdits logements 17a, 17b étant aménagés comme représenté, à l'extérieur de la partie destinée aux connexions.

Les joints 1' sont très semblables au joint 1 des figures précédentes, mais ne présentent pas de nervure extérieure (13 sur les autres figures), et les extrémités des rainures des flancs sont ici identiques (figure 7) tandis qu'en position de travail ses branches latérales ne sont plus divergentes. Ces petites différences montrent qu'il est bien sûr possible d'imaginer plusieurs modes de réalisation du joint sans sortir du cadre de l'invention.

Les logements 17a, 17b sont évidemment adaptés et on peut voir leur profil en U sur la figure 7.

Par ailleurs, on peut aussi constater la présence d'un étrier 18a prévu sur la paroi du logement 17a pour serrer le câble (un autre étant bien sûr prévu de l'autre côté).

Enfin, on comprend que le couvercle 14b une fois fermé vient recouvrir aussi les logements 17a, 17b et donc le dessus des joints.

## Revendications

1. Joint d'étanchéité (1,1') pour la traversée d'une paroi par un câble (12,12',12"), tuyau ou similaire, en matière déformable et présentant un alésage (5) pour le passage dudit câble et une fente (6) ménagée de l'alésage jusqu'à l'extérieur, pour l'introduction du câble dans ledit alésage, caractérisé en ce que la fente (6) présente une forme courbe jusqu'à son extrémité d'ouverture et s'étend à partir dudit alésage (5) de manière sensiblement tangentielle à la surface intérieure (6''') de celui-ci, tandis qu'elle est constituée par deux surfaces (6',6") en regard l'une de l'autre, respectivement rentrante (6') et saillante (6"), et qui sont destinées à venir au contact l'une de l'autre au moins en partie, après mise en place du joint dans un logement (11,17a,17b) approprié de l'élément à équiper.

2. Joint selon la revendication 1, caractérisé en ce que la surface rentrante (6') de la fente, se prolonge de manière continue pour constituer la surface intérieure (6',6'') de l'alésage (5), tandis que la surface saillante (6") de la fente rejoint la surface intérieure (6"') de l'alésage (5) par une ligne de rebroussement (7).

3. Joint selon la revendication 2, caractérisé en ce qu'au repos hors de son logement, la surface rentrante (6') de la fente et la surface intérieure (6''') de l'alésage (5) forment une surface continue spiralée.

4. Joint selon l'une des revendications 1 à 3, caractérisé en ce que la forme générale extérieure du joint (1,1') présente une section en forme de U à fond (3) arrondi, la fente (6) débouchant à l'opposé (4) dudit fond.

5. Joint selon l'une des revendications 1 à 4, caractérisé en ce qu'il présente sur chacun de ses flancs (8a,8b), une rainure (9a, 9b) qui entoure en partie l'alésage (5).

6. Joint selon la revendication 5, caractérisé en ce que l'âme centrale de matière qui sépare les deux espaces vides réalisés par les rainures (9a,9b) constitue une cloison intérieure (10) mince qui est disposée obliquement entre lesdites rainures.

7. Joint selon l'une des revendications 1 à 6, caractérisé en ce qu'il présente sur sa surface extérieure une nervure (13) de section sensiblement semi-circulaire.

8. Joint selon l'une des revendications 1 à 7 équipant un boîtier (14) de connexion électrique, en prenant place dans le logement (17a,17b) approprié, aménagé au voisinage de l'orifice d'entrée et/ou de sortie (15a,15b) dudit boîtier (14) de connexion électrique, caractérisé en ce que ledit logement (17a,17b) est prévu pour que ledit orifice soit sensiblement coaxial à l'alésage (5) du joint (1'), lorsque ledit joint est mis en place.

9. Joint selon la revendication 8, caractérisé en ce que le logement (17a,17b) du joint est fermé par une partie appropriée du couvercle (14b) du boîtier (14).

10. Joint selon l'une des revendications 8 et 9, caractérisé en ce que son logement (17a,17b) est aménagé à l'extérieur de la partie du boîtier destinée aux connexions.

## Patentansprüche

1. Dichtring (1, 1') aus verformbarem Material zum Hindurchführen eines Kabels (12, 12', 12"), Rohres oder dgl. durch eine Wand, welcher eine Bohrung (5) für die Hindurchführung des Kabels und einen Schlitz (6) aufweist, der von der Bohrung nach außen sich erstreckend für das Einführen des Kabels in diese Bohrung vorgesehen ist, **dadurch gekennzeichnet**, daß der Schlitz (6) bis zu seinem Öffnungsende bogenförmig ist und ausgehend von der Bohrung sich im wesentlichen tangential zur inneren Oberfläche (6"') derselben erstreckt und von zwei einander gegenüberliegenden, eingezogenen (6') bzw. vorspringenden Flächen (6") gebildet wird, die wenigstens teilweise miteinander in Berührung bringbar sind, nachdem der Dichtring in einen zweckentsprechenden Sitz des damit zu versehenen Elementes angeordnet worden ist.

2. Dichtring nach Anspruch 1, **dadurch gekennzeichnet**, daß die eingezogene Fläche (6') des Schlitzes sich kontinuierlich fortsetzt, um die innere Fläche (6"') der Bohrung zu bilden, während die vorspringende Fläche (6") des Schlitzes auf die innere Fläche (6"') der Bohrung (5) nach Art einer Spitzkehre trifft.

3. Dichtring nach Anspruch 2, **dadurch gekennzeichnet**, daß die eingezogene Fläche (6') des Schlitzes und die innere Fläche (6"') der Bohrung (5) in unbelastetem Zustand außerhalb des Sitzes eine kontinuierliche spiralförmige Fläche bilden.

4. Dichtring nach einem der Ansprüche 1 - 3, **dadurch gekennzeichnet**, daß die allgemeine äußere Form des Dichtringes (1, 1') einen Querschnitt in Form eines U mit abgerundetem Boden aufweist, wobei der Schlitz (6) sich an der gegenüberliegenden Seite (4) des Bodens öffnet.

5. Dichtring nach einem der Ansprüche 1 - 4, **dadurch gekennzeichnet**, daß er an jeder Seite (8a, 8b) eine nutförmige Ausnehmung (9a, 9b) aufweist, die die Bohrung (5) teilweise umschließt.

6. Dichtring nach Anspruch 5, **dadurch gekennzeichnet**, daß der mittlere Materialsteg, der die beiden von den nutförmigen Ausnehmungen (9a, 9b) gebildeten Hohlräume trennt, eine dünne innere Zwischenwand bildet, die schräg zwischen den nutförmigen Ausnehmungen angeordnet ist.

7. Dichtring nach einem der Ansprüche 1 - 6, **dadurch gekennzeichnet**, daß er an seiner Außenfläche mit einer im Querschnitt im wesentlichen halbkreisförmigen Rippe (13) versehen ist.

8. Dichtring nach einem der Ansprüche 1 - 7 zum Ausrüsten eines elektrischen Anschlußgehäuses (14), wobei er in dem zweckentsprechenden Sitz (17a, 17b) positioniert wird, der nahe der Eintrittsöffnung und/oder der Austrittsöffnung (15a, 15b) des elektrischen Anschlußgehäuses (14) angeordnet ist, **dadurch gekennzeichnet**, daß dieser Sitz (17a, 17b) so vorgesehen ist, daß die Öffnung im wesentlichen koaxial zur Bohrung (5) des Dichtringes (1') verläuft, wenn der Dichtring eingesetzt ist.

9. Dichtring nach Anspruch 8, dadurch gekennzeichnet, daß der Sitz (17a, 17b) des Dichtringes durch einen zweckentsprechenden Teil des Deckels (14b) des Gehäuses (14) verschlossen wird.

10. Dichtring nach einem der Ansprüche 8 oder 9, dadurch gekennzeichnet, daß sein Sitz (17a, 17b) außen an dem Teil des Gehäuses angebracht ist, der für die Verbindung vorgesehen ist.

## Claims

1. Seal (1, 1') for passage of a cable (12, 12', 12"), pipe or the like through a wall, said seal being made of deformable material and exhibiting a bore (5) for passage of said cable and a slit (6) formed from the bore to the outside for the introduction of the cable in said bore, characterised in that the slit (6) exhibits a curved shape up to its opening end and extends from said bore (5) substantially tangentially to the internal surface (6"') of the latter, while it is constituted by two surfaces (6', 6") which face one another and are respectively re-entrant (6') and salient (6") and are designed to come into contact with one another at least in part after the seal is placed in an appropriate housing (11, 17a, 17b) of the element to be equipped.

2. Seal according to claim 1, characterised in that the re-entrant surface (6') of the slit extends continuously to form the internal surface (6''') of the bore (5), while the salient surface (6") of the slit joins the internal surface (6"') of the bore (5) through a cusp line (7).

3. Seal according to claim 2, characterised in that at rest outside its housing the re-entrant surface (6') of the slit and the internal surface (6"') of the bore (5) form a continuous spiral surface.

4. Seal according to one of claims 1 to 3, characterised in that the general external form of the seal (1, 1') exhibits a U-shaped section with a rounded bottom (3), the slit (6) debouching at the opposite end (4) to said bottom.

5. Seal according to one of claims 1 to 4, characterised in that on each of its flanks (8a, 8b) it exhibits a groove (9a, 9b) which partially surrounds the bore (5).

6. Seal according to claim 5, characterised in that the central core of material which separates the two empty spaces formed by the grooves (9a, 9b) constitutes a thin internal wall (10) which is disposed obliquely between said grooves.

7. Seal according to one of claims 1 to 6, characterised in that on its external surface it exhibits a rib (13) of substantially semi-circular section.

8. Seal according to one of claims 1 to 7 fitted to an electrical connecting box (14), taking its place in the appropriate housing (17a, 17b) formed in the vicinity of the inlet and/or outlet orifice (15a, 15b) of said electrical connecting box (14), characterised in that said housing (17a, 17b) is provided so that said orifice is substantially coaxial with the bore (5) of the seal (1') when said seal is in place.

9. Seal according to claim 8, characterised in that the housing (17a, 17b) of the seal is closed by an appropriate portion of the cover (14b) of the box (14).

10. Seal according to one of claims 8 and 9, characterised in that its housing (17a, 17b) is formed on the outside of the portion of the box intended for the connections.
